# EUROPEAN PATENT APPLICATION

(11) **EP 2 025 589 A1**
(43) Date of publication of application: **18.02.2009**
(21) Application number: 07016098.1
(22) Date of filing: 16.08.2007
(51) Int. Cl.: B62K 21/12

(54) **Breakproof handle bar**

(71) Applicant: Yicheng Sports Co., Ltd., Changhua 523 (TW)
(72) Inventor: Yen, Yu-Chuan, Changhua 523 (TW)
(74) Representative: Reinhardt, Harry

(57) **Abstract**

A breakproof handle bar (1) includes continuous wavy tubular concave and convex cambers (11,12) disposed on an external surface of a middle section of the bar, a flat and smooth circular surface (13) disposed separately on external surfaces of both left and right sides of the bar, and an internal wall (14) with a uniform thickness disposed in a hollow diameter along the interior of the whole bar, so that the bar can sustain a large force and prevent the bar from being broken, cracked, or deformed.

## Description

### BACKGROUND OF THE INVENTION

### Field of the Invention

The present invention relates to a breakproof handle bar capable of sustaining a large force and preventing the bar from being broken, cracked, or deformed.

### Description of the Related Art

At present, many objects are related to the applications of rigid bars, such as those for manufacturing transportation means including bicycles and motorcycles or various different kinds of fitness equipments for physical training in other occasions. However, most of the rigid bars used at present come with a surface and an internal diameter with the same magnitude from top to bottom. In addition to the manufacturing cost, manufacturers also have to take the manufacturing technique into consideration for the manufacture of these bars. If the overall thickness of the bar is increased, the overall weight of the bar is also increased. As a result, the weight of the bike body will be increased, and the manufacturing cost will be increased accordingly. However, if the thickness of the bar is decreased in order to reduce the weight, the thin bar will be unable to resist large external impacts or collisions, and the bar may be deformed or even broken easily.

### Summary of the Invention

In view of the foregoing shortcomings of the prior art, the inventor of the present invention based on years of experience in the related industry to conduct extensive researches and experience, and finally developed a breakproof handle bar in accordance with the present invention.

The primary objective of the present invention is to overcome the shortcomings of the prior art by providing a breakproof handle bar that includes continuous wavy tubular concave and convex cambers disposed on an external surface of a middle section of the bar, a flat and smooth circular surface disposed separately on external surfaces of both left and right sides of the bar, and an internal wall with a uniform thickness disposed in a hollow diameter along the interior of the whole bar, so that the bar can sustain a large force and prevent the bar from being broken, cracked, or deformed.

Another objective of the present invention is to provide a breakproof handle bar, wherein the continuous wavy tubular concave and convex cambers disposed on an external surface of the bar are arranged linearly in segments of the length of the bar.

Another objective of the present invention is to provide a breakproof handle bar, wherein the continuous wavy tubular concave and convex cambers disposed on an external surface of the bar have diversified concave and convex lines to give a three-dimensional perception.

Another objective of the present invention is to provide a breakproof handle bar, wherein the continuous wavy tubular concave and convex cambers disposed on an external surface of the bar are coated with paints of different colors to improve the overall artistic look and diversity of the bar.

Another objective of the present invention is to provide a breakproof handle bar, wherein the continuous wavy tubular concave camber bar disposed on an external surface of a middle section of the bar is coated with a fluorescent paint to provide a lighting effect at nighttime and indicate a position for an alert effect to improve safety.

Another objective of the present invention is to provide a breakproof handle bar, wherein the bar is used for assembling a bicycle.

Another objective of the present invention is to provide a breakproof handle bar, wherein the bar is used for assembling a motorcycle.

Another objective of the present invention is to provide a breakproof handle bar, wherein the bar is used for assembling a fitness equipment.

### BRIEF DESCRIPTION OF THE DRAWINGS

Fig. 1 is a perspective view of a structure of the present invention;
Fig. 2A is a section view of a manufacturing procedure of the present invention;
Fig. 2B is another section view of a manufacturing procedure of the present invention;
Fig. 3 is a schematic view of a first shaped structure of the present invention;
Fig. 4 is a schematic view of a second shaped structure of the present invention;
Fig. 5 is a schematic view of a third shaped structure of the present invention;
Fig. 6 is a schematic view of a fourth shaped structure of the present invention;
Fig. 7A is a schematic view of a handle bar assembled to a bicycle in accordance with the present invention;
Fig. 7B is a schematic view of another handle bar assembled to a bicycle in accordance with the present invention; and
Fig. 8 is a schematic view of a handle bar assembled to a motorcycle in accordance with the present invention.

### DETAILED DESCRIPTION OF THE PREFERRED EMBODIMENTS

To make it easier for our examiner to understand the objectives, characteristics and effects of the present invention, preferred embodiments with accompanying drawings are used for a detailed description of the invention as follows.

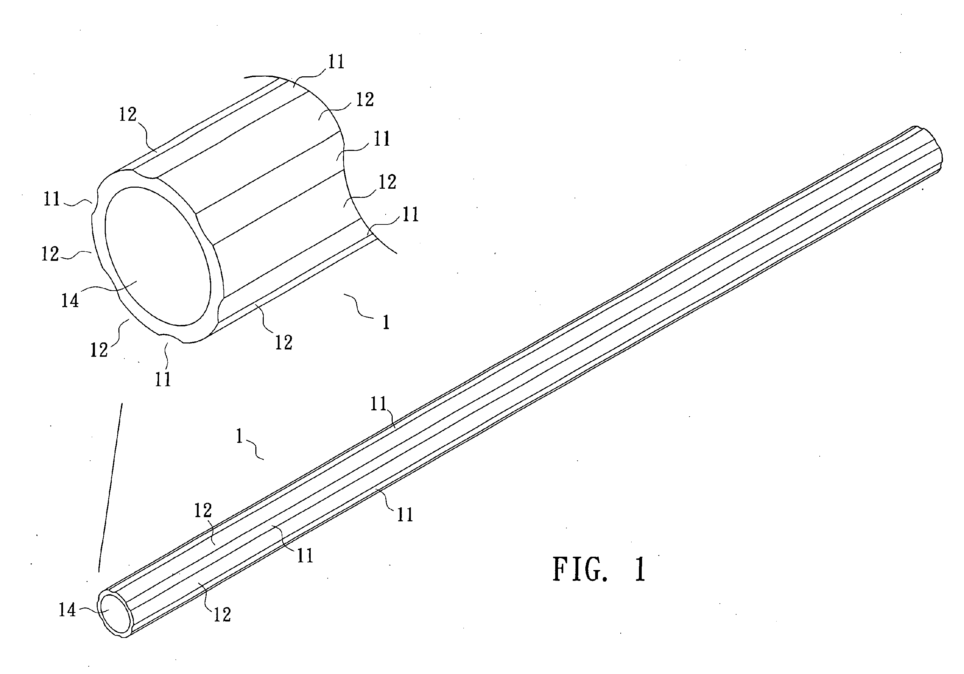

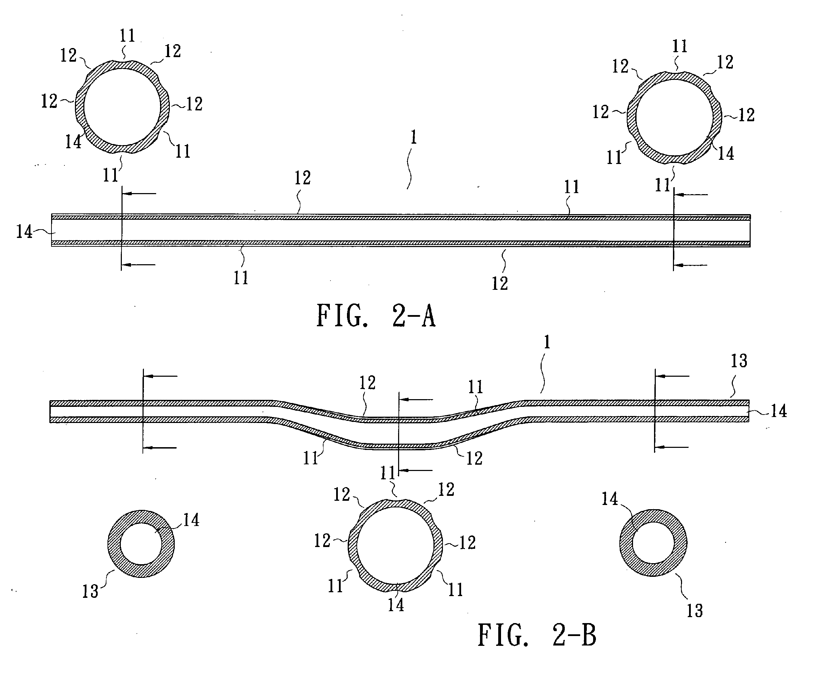

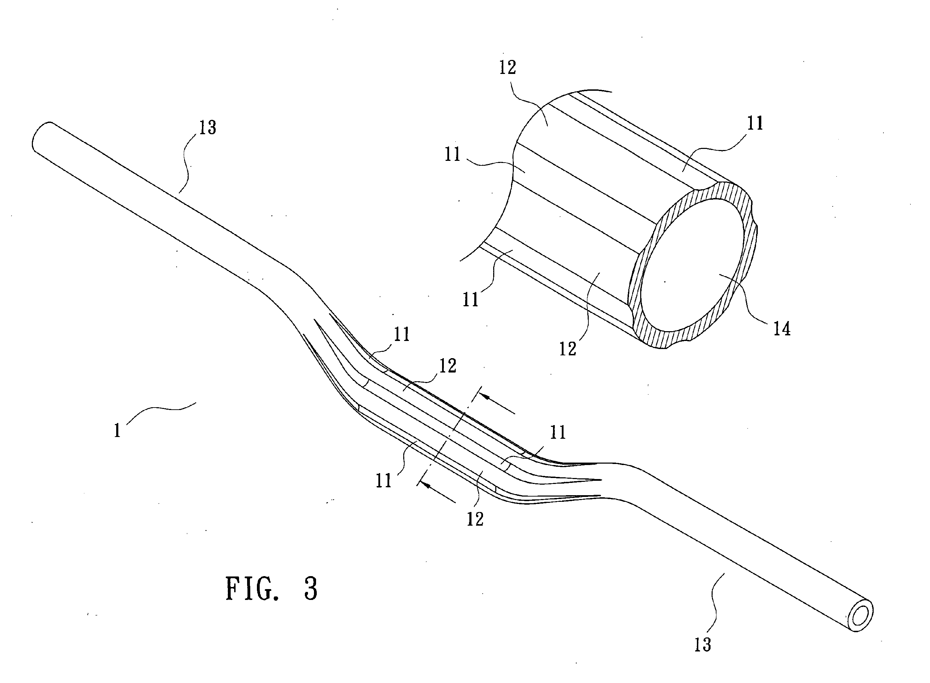

Referring to Figs. 1, 2A, 2B and 3 for a breakproof handle bar of the present invention, the breakproof handle bar includes continuous wavy tubular concave camber 11 and convex camber 12 disposed on an external surface of a middle section of a bar 1 with a predetermined length, a flat and smooth circular surface 13 manufactured separately on external surfaces of both left and right sides of the bar, and an internal wall 14 with a uniform thickness disposed in a hollow diameter along the interior of the whole bar 1, wherein the continuous wavy tubular concave and convex cambers 11, 12 disposed on the external surface of the bar 1 have diversified concave and convex lines to give a three-dimensional perception.

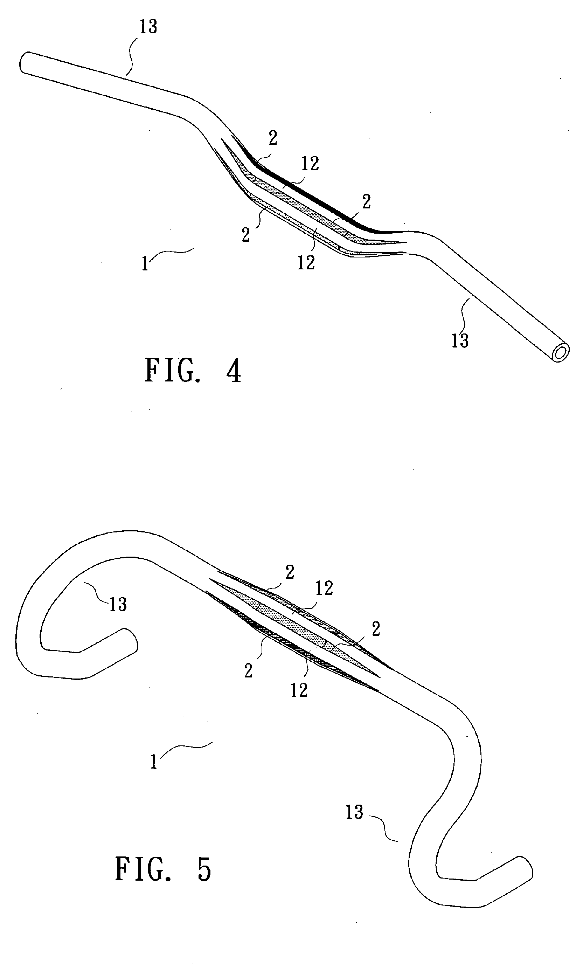

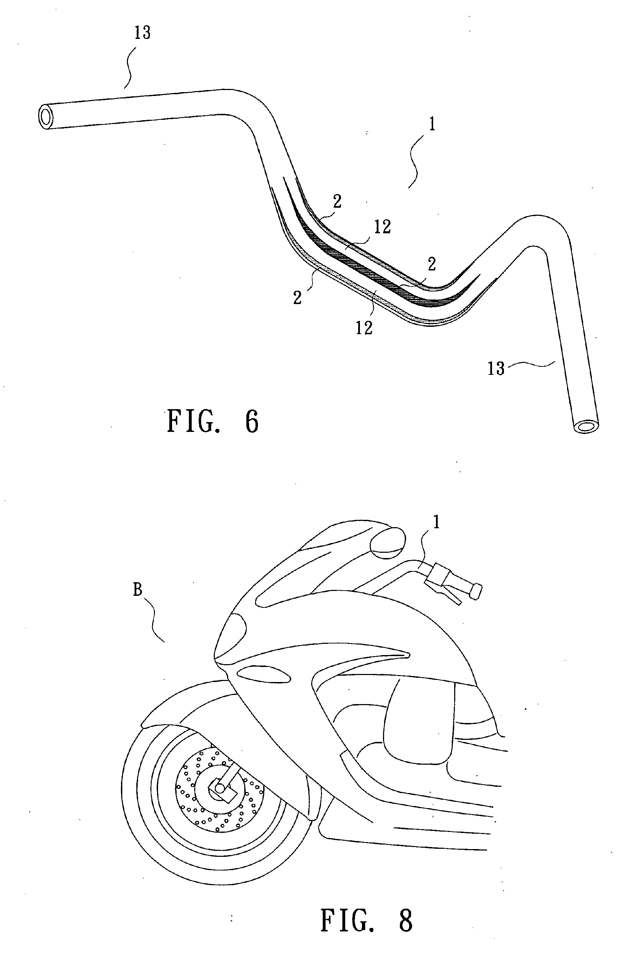

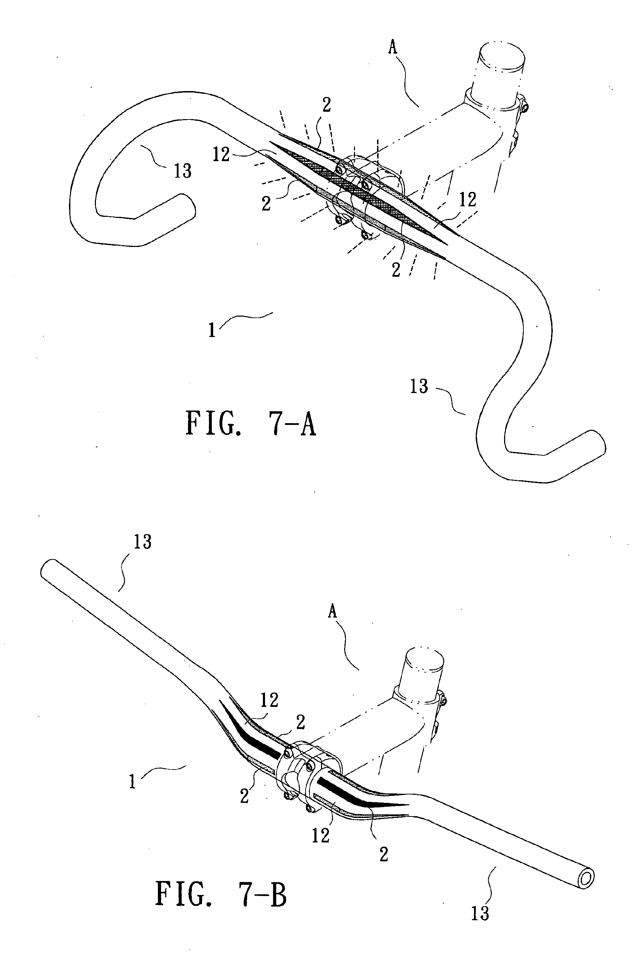

Therefore, the bar 1 has a very strong anti-bending function to give the breakproof effect. In the meantime, the concave camber 11 on the external surface of the middle section of the bar 1 can be painted with different colors to improve the overall artistic look of the bar 1 and made into different shapes (as shown in Figs. 4 to 6) for a handlebar, a frame, a seat stem and other accessories of a bicycle A (as shown in Fig. 7A), a motorcycle B (as shown in Fig. 8) or other fitness equipments and tubular furniture. The continuous wavy tubular concave camber 11 and convex camber 12 may be arranged linearly in segments of the length of the bar 1 (as shown in Fig. 7B) for sustaining vibrations produced while a rider is riding on a rough road and the weight of the upper body of the rider, so that the bar 1 can sustain a large force and prevent the bar from being broken, cracked, or deformed. The concave camber 11 on the external surface of the bar 1 can be coated with a fluorescent paint 2 to provide a lighting effect at nighttime and indicate a position for an alert effect to improve safety.

In summation of the description above, the present invention herein enhances the performance over the conventional structure, and definitely can overcome the shortcomings of the prior art and comply with the requirements of patent application, and is thus duly filed for patent application.

## Claims

1. A breakproof handle bar, having continuous wavy tubular concave and convex cambers disposed on an external surface of a middle section of the bar, a flat and smooth circular surface disposed separately on external surfaces of both left and right sides of the bar, and an internal wall with a uniform thickness disposed in a hollow diameter along the interior of the whole bar, thereby the bar can sustain a large force and prevent the bar from being broken, cracked, or deformed.

2. The breakproof handle bar of claim 1, wherein the continuous wavy tubular concave and convex cambers disposed on an external surface of the bar are arranged linearly in segments of the length of the bar.

3. The breakproof handle bar of claim 1, wherein the continuous wavy tubular concave and convex cambers disposed on an external surface of the bar have diversified concave and convex lines to give a three-dimensional perception.

4. The breakproof handle bar of claim 1, wherein the continuous wavy tubular concave and convex cambers disposed on an external surface of the bar are coated with paints of different colors to improve the overall artistic look and diversity of the bar.

5. The breakproof handle bar of claim 1, wherein the continuous wavy tubular concave camber bar disposed on an external surface of a middle section of the bar is coated with a fluorescent paint to provide a lighting effect at nighttime and indicate a position for an alert effect to improve safety.

6. The breakproof handle bar of claim 1, wherein the bar is for assembling a bicycle.

7. The breakproof handle bar of claim 1, wherein the bar is for assembling a motorcycle.

8. The breakproof handle bar of claim 1, wherein the bar is for assembling a fitness equipment.
